# EUROPÄISCHE PATENTSCHRIFT

(11) **EP 1 920 969 B1**
(45) Veröffentlichungstag und Bekanntmachung des Hinweises auf die Patenterteilung: **08.07.2009**
(21) Anmeldenummer: 07019501.1
(22) Anmeldetag: 05.10.2007
(51) Int. Cl.: B60N 2/48

(54) **Schwenkbare Kopfstütze**
Swivel headrest
Appui-tête orientable

(30) Priorität: 09.11.2006 DE 102006052788
(43) Veröffentlichungstag der Anmeldung: 14.05.2008
(73) Patentinhaber: YMOS GmbH, 55743 Idar-Oberstein (DE)
(72) Erfinder: Buschmeier, Konrad, 33154 Salzkotten-Scharmede (DE)
(74) Vertreter: Podszus, Burghart

(56) Entgegenhaltungen:
- EP-A- 1 316 469
- EP-A- 1 375 244
- DE-A1- 2 644 485

## Beschreibung

Die Erfindung betrifft eine schwenkbare Kopfstütze mit einem Kopfstützkissen und einem mit dem Kopfstützkissen drehfest verbundenen Kopfstützbügel, dessen Schenkel mit zwei in die Rückenlehne eines Fahrzeugsitzes oberseitig einführbaren Führungsstangen verbunden sind, gemäß den Merkmalen des Oberbegriffs des Anspruchs 1.

Fahrzeugsitze mit Kopfstützen sind seit langem bekannt und dienen insbesondere der Verminderung von Krafteinwirkungen auf die Halswirbelsäule bei einer plötzlichen Verzögerung der Fahrzeugbewegung, wie sie beispielsweise bei einer Vollbremsung oder einem Aufprall des Fahrzeuges auf ein Hindernis auftritt. Bei einer derartigen Verzögerung des Kraftfahrzeuges schnellt nämlich der Kopf des jeweiligen Insassen zunächst nach vorne, um dann in dem Augenblick des Fahrzeugstillstandes wieder nach hinten zu schlagen.

Aus der DE 199 51 966 A1 ist eine Kopfstütze bekannt, bei der bei einem Aufprall des entsprechenden Fahrzeuges auf ein Hindernis ein Prallelement mittels eines als Parallelogramm ausgebildeten Viergelenkes ausfährt, um den Kopf des jeweiligen Insassens wertvolle Millisekunden früher als eine herkömmliche Kopfstütze abzufangen. Dabei dient als Antrieb des Prallelementes ein federbelasteter, das Prallelement beaufschlagender Schwenkarm, welcher in der Crashstellung verriegelt wird.

Aus der DE 26 44 485 A1 ist eine schwenkbare Kopfstütze mit einem Kopfstützkissen und einem mit dem Kopfstützkissen drehfest verbundenen Kopfstützbügel bekannt, dessen Schenkel mit zwei in die Rückenlehne eines Fahrzeugsitzes oberseitig einführbaren Führungsstangen verbunden sind, wobei die beiden Schenkel des Kopfstützbügels jeweils um eine horizontal verlaufende Drehachse schwenkbar mit den beiden Führungsstangen verbunden sind und wobei die Kopfstütze mindestens eine erste Feder enthält, die mit dem Kopfstützbügel in Wirkverbindung steht, derart, daß dieser durch die erste Feder von einer Ruheposition, bei welcher die erste Feder vorgespannt ist, in eine Crashposition, bei welcher die erste Feder mindestens teilweise entspannt ist, um die Drehachse schwenkbar ist. Dabei ist dem Kopfstützbügel eine zwischen dem Kopfstützkissen und dem der Rükkenlehne befindlichen Ratsche zugeordnet, die eine Schwenkbewegung im Crashfalle des Kopfstützbügels nur in einer Richtung zuläßt.

Dieses hat zur Folge, daß auch eine Schwenkbewegung zur Veränderung der Ruheposition der Kopfstütze nur in einer Richtung möglich ist. Will man die Ruheposition der Kopfstütze hingegen auch in der entgegengesetzten Richtung verändern, muß die Ratsche gelöst und nach Verstellung der Kopfstütze wieder montiert werden. Bei dieser Montage müssen dann die Kräfteverhältnisse im Crashfall berücksichtigt werden.

Aus der EP-A-1 316 469 ist eine Kopfstütze bekannt, die aus einem Trägerteil und einem schwenkbar an dem Trägerteil angeordneten Kopfstützkissen besteht. Dabei nimmt das Trägerteil die lediglich höhenverstellbaren Führungsstangen auf, über welche die Kopfstütze mit dem Fahrzeugsitz verbunden ist. Außerdem ist ein mittels einer Crashsensoreinrichtung steuerbares, elektromagnetisches Stellelement vorgesehen, das ein bewegbares Sperrelement umfaßt, welches mit einem mit dem Kopfstützkissen verbundenen Rastelement derart zusammenwirkt, daß das in seiner Ruheposition befindliche Kopfstützkissen in dieser Position fixierbar ist, und daß im Crashfall das Sperrelement das Rastelement freigibt, so daß das Kopfstützkissen durch die Beschleunigung im Crashfall in seine Crashposition geschwenkt wird.

Ausgehend von der DE 26 44 485 A1 liegt der Erfindung die Aufgabe zugrunde, eine schwenkbare Kopfstütze zu offenbaren, welche sich zum Abfangen des Kopfes eines Fahrzeuginsassens bei einer starken Verzögerung des Fahrzeuges automatisch nach vorne neigt, wobei auf einfache Weise eine kontinuierliche Einstellung der Ruheposition der Kopfstütze sichergestellt ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, einerseits in einem Hohlraum des Kopfstützkissens ein mit mindestens einer der Führungsstangen fest verbundenes und durch eine Crashsensoreinrichtung steuerbares elektromagnetisches Stellelement anzuordnen, das ein bewegbares Sperrelement umfaßt, welches mit einem mit dem Kopfstützbügel drehfest verbundenen Rastelement derart zusammenwirkt, daß der in seiner Ruheposition befindliche Kopfstützbügel in dieser Position fixierbar ist, und daß im Crashfall das Sperrelement das Rastelement freigibt, so daß der Kopfstützbügel durch die vorgespannte erste Feder in seine Crashposition geschwenkt wird. Andererseits ist vorgesehen, daß mit mindestens einem der beiden Schenkel des Kopfstützbügels eine sich in Richtung der Drehachse erstreckende Betätigungswelle drehfest verbunden ist, wobei das Rastelement und die Betätigungswelle über eine Reibschlußkupplung miteinander verbunden sind, so daß in der Ruheposition des Kopfstützbügels die Reibschlußkupplung als Bremse wirkt, und daß nach Entfernen des Sperrelementes der Kopfstützbügel zusammen mit der Reibschlußkupplung in die Crashposition verschwenkt wird.

Erfindungsgemäß sind die beiden Schenkel des Kopfstützbügels jeweils um eine in dem Kopfstützkissen horizontal verlaufende Drehachse schwenkbar mit den beiden Führungsstangen verbunden.

Bei einer ersten Ausführungsform der Erfindung ist vorgesehen, daß das Rastelement seitlich mindestens eine Rastausnehmung aufweist, in die in der Ruheposition des Kopfstützbügels ein durch einen Elektromagneten betätigbares stiftförmiges Sperrelement eingreift.

Vorzugsweise handelt es sich bei der ersten Feder zum Verschwenken des Kopfstützbügels um eine auf die Betätigungswelle wirkende Drehfeder.

Vorzugsweise weist die Reibschlußkupplung eine mit der Betätigungswelle drehfest verbundene erste Kupplungsscheibe und eine sich daran anschließende, auf der Betätigungswelle dreh- und verschiebbar angeordnete, durch eine zweite Feder beaufschlagte zweite Kupplungsscheibe mit Reibbelag auf, wobei die zweite Feder sich auf ihrer der zweiten Kupplungsscheibe abgewandten Seite an einem drehfest mit dem Rastelement verbundenen Trägerelement abstützt, welches durch ein Einstellelement axial auf der Betätigungswelle verschiebbar angeordnet ist.

Bei dem Einstellelement kann es sich beispielsweise um eine Mutter handeln, welche auf ein an dem Ende der Betätigungswelle befindliches Gewinde aufschraubbar ist und die auf die der zweiten Feder abgewandten Seite des Trägerelementes drückt.

Vorzugsweise sollte das Kopfstützkissen seitlich eine durch ein Abdeckelement verdeckbare Öffnung aufweisen, über welche die Mutter zwecks Einstellung der Reibschlußkupplung von außen zugänglich ist.

Feiner ist das durch den Elektromagneten betätigbare Sperrelement vorteilhafterweise über ein elastisches Element (z.B. eine Druckfeder) mit dem Anker des Elektromagneten verbunden, so daß das Sperrelement beispielsweise nach einem Crash durch Zurückdrücken der Kopfstütze in seine Ruheposition automatisch wieder in die Ausnehmung gedrückt wird und die Kopfstütze in dieser Position positioniert.

Weitere Einzelheiten und Vorteile der Erfindung ergeben sich aus den folgenden, anhand von Figuren erläuterten Ausführungsbeispielen. Es zeigen:
Fig.1 eine teilweise im Schnitt dargestellte Rückansicht auf ein erstes Ausführungsbeispiel einer erfindungsgemäßen Kopfstütze ohne Reibschlußkupplung, wobei das Kopfstützkissen lediglich gestrichelt angedeutet ist.
Fig.2 eine Fig.1 im wesentlichen entsprechende Rückansicht eines zweiten Ausführungsbeispieles einer erfindungsgemäßen Kopfstütze mit Reibschlußkupplung;
Fig.3 eine vergrößerte Ansicht des in Fig.2 mit III bezeichneten Bereiches;
Fig.4 einen Schnitt durch die in Fig.2 dargestellte Kopfstütze entlang der dort mit IV-IV bezeichneten Schnittlinie;
Fig.5 und 6 zwei Seitenansichten auf ein drittes Ausführungsbeispiel einer erfindungsgemäßen Kopfstütze in unterschiedlichen Betrachtungsebenen.

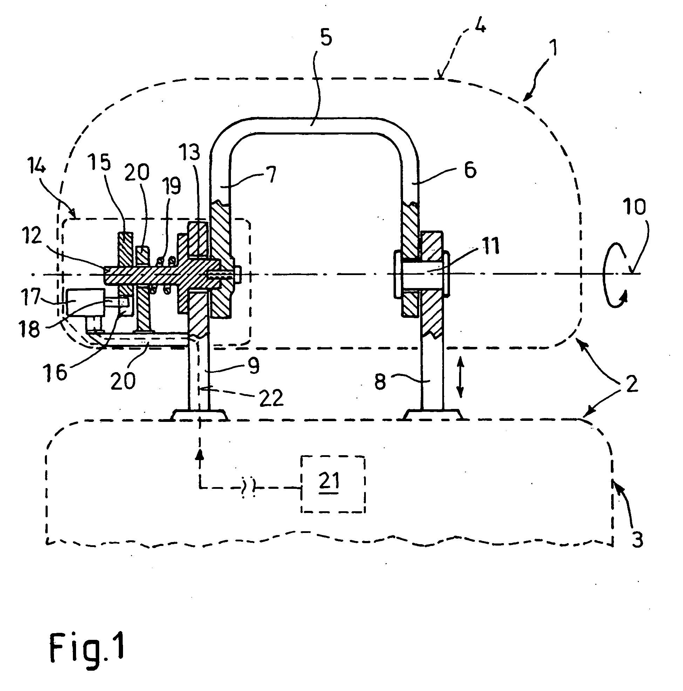

In Fig.1 ist mit 1 eine schwenkbare Kopfstütze für einen Fahrzeugsitz 2 bezeichnet, die oberhalb der Rückenlehne 3 des Sitzes 2 angeordnet ist. Die Kopfstütze 1 umfaßt ein gestrichelt angedeutetes Kopfstützkissen 4 und einen mit dem Kopfstützkissen 4 drehfest verbundenen Kopfstützbügel 5.

Die beiden Schenkel 6, 7 des Kopfstützbügels 5 sind jeweils um eine in dem Kopfstützkissen 4 horizontal verlaufende Drehachse 10 schwenkbar mit Führungsstangen 8, 9 verbunden. Hierzu ist der erste Schenkel 6 des Kopfstützbügels 5 drehbar auf einer mit der ersten Führungsstange 8 verbundenen Welle 11 gelagert. Der zweite Schenkel 7 des Kopfstützbügels 5 ist mit einer sich in Richtung der Drehachse 10 erstreckenden Betätigungswelle 12 drehfest verbunden, die in einem in der zweiten Führungsstange 9 vorgesehenen Drehlager 13 schwenkbar gelagert ist.

An der Betätigungswelle 12 ist in einem entsprechenden Hohlraum 14 auf der dem Bügel 5 abgewandten Seite ferner ein scheibenförmiges Rastelement 15 befestigt, welches seitlich mindestens eine Rastausnehmung 16 aufweist, in die in der in Fig. 1 dargestellten Ruheposition des Kopfstützbügels 5 ein durch einen Elektromagneten 17 betätigbares stiftförmiges Sperrelement 18 eingreift.

Die Kopfstütze 1 weist außerdem mindestens eine als Drehfeder wirkende erste Feder 19 auf, welche um die Betätigungswelle 12 herum angeordnet ist und mit ihrem ersten Ende an der Betätigungswelle 12 und mit ihrem zweiten Ende an einem Trägerteil 20 verbunden ist. Dieses Trägerteil 20 ist mit der zweiten Führungsstange 9 der Kopfstütze 1 fest verbunden und trägt ebenfalls den Elektromagneten 17.

Durch die Drehfeder 19 kann der Kopfstützbügel 5, und damit auch das Kopfstützkissen 4, von der in Fig. 1 dargestellten Ruheposition, bei welcher die erste Feder 19 vorgespannt ist und das stiftförmige Sperrelement 18 in die Rastausnehmung 16 des Rastelementes 15 eingreift, in eine nicht dargestellte Crashposition zum Fahrzeuginsassen hin (d.h. in Fig.1 in die Bildebene hinein) um die Drehachse 10 geschwenkt werden, sobald das Sperrelement 18 durch Bestromung des Elektromagneten 17 aus der Rastausnehmung 16 herausgezogen wird, so daß die erste Feder 19 sich mindestens teilweise entspannt. Dabei erfolgt die Bestromung durch eine Crashsensoreinrichtung 21, die beispielsweise in der Rückenlehne 3 des Fahrzeugsitzes 2, aber beispielsweise auch im Bereich eines Airbags angeordnet sein kann.

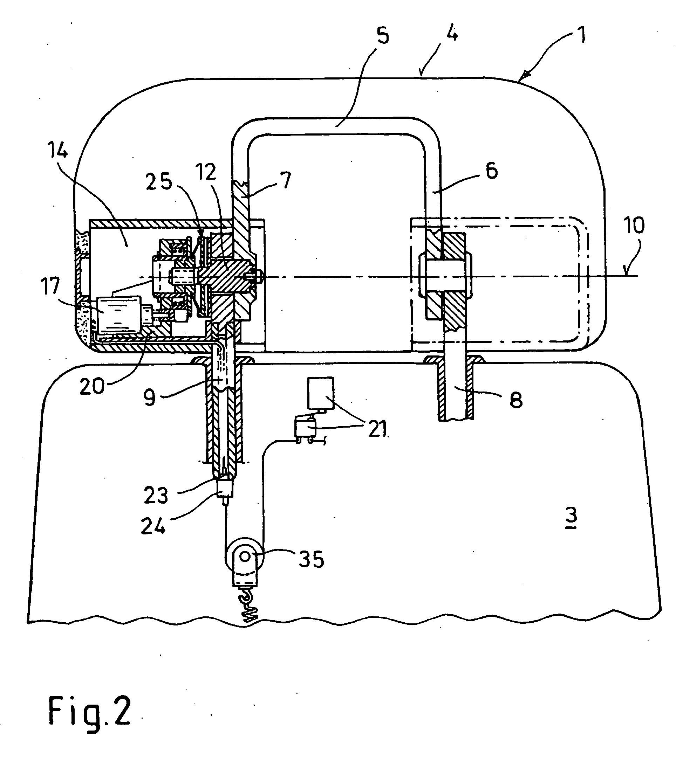

Die elektrische Verbindung zwischen der Crashsensoreinrichtung 21 und dem Elektromagneten 17 erfolgt bei dem dargestellten Ausführungsbeispiel mittels eines Kabels 22, welches durch die zweite Führungsstange 9 in die Rückenlehne 3 geführt wird. Am sitzseitigen Ende dieser Führungsstange 9 ist ein Stecker 23 (Fig.2) befestigt, welcher in eine in der Rückenlehne 3 angeordneten Buchse 24 eingesteckt ist, so daß die Führungsstangen 8, 9 der Kopfstütze 1 aus der Rückenlehne 3 entfernbar und auch wieder in die Rückenlehne 3 einführbar sind.

Um die Winkelstellung des Kopfstützkissens 4 in seiner Ruheposition ändern zu können, kann bei dem in Fig. 1 dargestellten Ausführungsbeispiel das Rastelement 15 mehrere, über den Umfang verteilt angeordnete Rastausnehmungen 16 aufweisen. Das Sperrelement 18 kann in einem derartigen Fall beispielsweise federbeaufschlagt sein, und zwar derart, daß es durch ein entsprechendes Betätigungselement (nicht dargestellt) mechanisch aus den Rastausnehmungen 16 herausziehbar ist und erst bei Erreichen der gewünschten Winkelstellung des Kopfstützkissens 4 wieder freigegeben wird. Es kann aber auch eine zweite elektrische Schaltung zur Bestromung des Elektromagneten 17 vorgesehen werden, die bei dem Einstellvorgang des Kopfstützkissens 4 ein Herausziehen des Sperrelementes 18 aus der Rastausnehmung 16 bewirkt.

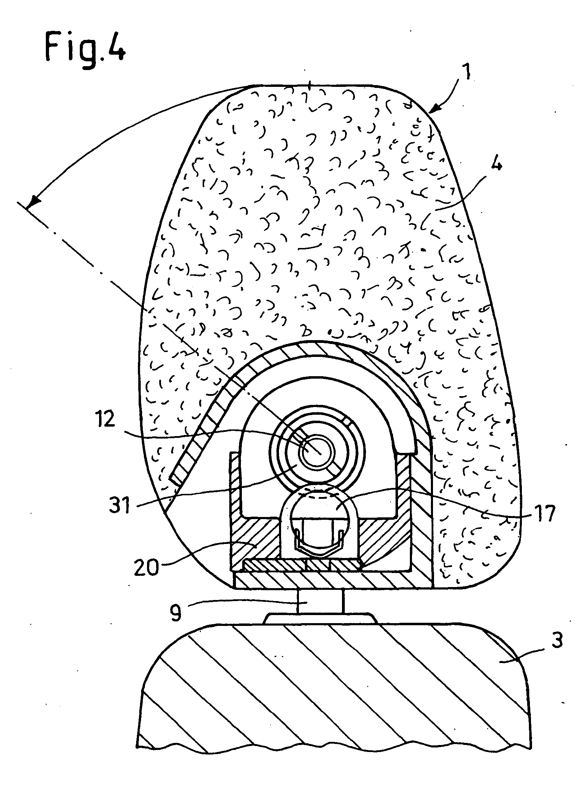

In der Praxis hat sich allerdings gezeigt, daß eine kontinuierliche winkelmäßige Einstellung der Ruheposition des Kopfstützkissens 4 bevorzugt wird, wobei auch in einem derartigen Fall die Kopfstütze 1 crashaktiv ausgebildet sein soll. Ein derartiges Ausführungsbeispiel ist in den Fig. 2-4 dargestellt, wobei für Teile, welche die gleiche oder eine ähnliche Funktion besitzen wie bei dem ersten Ausführungsbeispiel, die gleichen Bezugszeichen verwendet wurden.

Die kontinuierliche Einstellung der Ruhelage erfolgt bei diesem Ausführungsbeispiel mittels einer zwischen Rastelement 15 und Betätigungswelle 12 angeordneten Reibschlußkupplung 25, derart, daß in der Ruheposition des Kopfstützbügels 5 die Reibschlußkupplung 25 als Bremse wirkt, und daß nach Entfernen des Sperrelementes 18 der Kopfstützbügel 5 zusammen mit der Reibschlußkupplung 25 in die Crashposition verschwenkt wird.

Hierzu weist die Reibschlußkupplung 25 eine mit der Betätigungswelle 12 drehfest verbundene erste Kupplungsscheibe 26 und eine sich daran anschließende, auf der Betätigungswelle 12 dreh- und verschiebbar angeordnete, durch eine zweite Feder (Tellerfeder) 27 beaufschlagte zweite Kupplungsscheibe 28 mit einem Reibbelag 29 auf. Dabei stützt sich die Tellerfeder 27 auf ihrer der zweiten Kupplungsscheibe 28 abgewandten Seite an einem Trägerelement 30 ab, welches drehfest mit dem hülsenförmig ausgebildeten Rastelement 15 verbunden und durch ein Einstellelement 31 axial auf der Betätigungswelle 12 verschiebbar angeordnet ist.

Bei dem Einstellelement 31 handelt es sich um eine Mutter, welche auf ein an dem Ende der Betätigungswelle 12 befindliches Außengewinde 32 aufschraubbar ist und die auf die der Tellerfeder 27 abgewandten Seite des Trägerelementes 30 drückt. Die Bremskraft (Kupplungskraft) kann ohne Demontage von der Außenseite des Kopfstützkissens 4 eingestellt werden. Hierzu wird das seitlich angeordnete Abdeckelement (Kappe) 33 einer Öffnung 36 der Kopfstütze 1 entfernt und mit Hilfe eines Steckschlüssels (nicht dargestellt) die Mutter 31 der Bremse 25 nachgestellt.

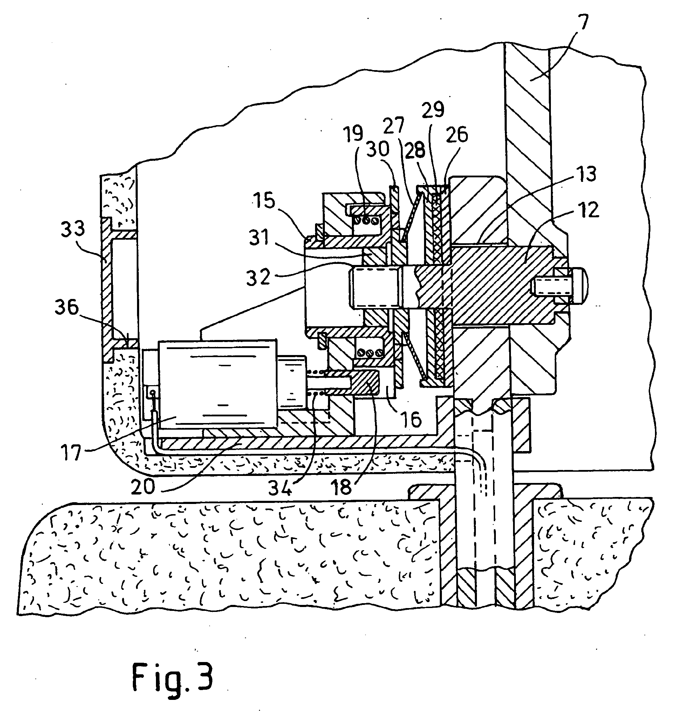

Wie insbesondere Fig.3 entnehmbar ist, ist das durch den Elektromagneten 17 betätigbare Sperrelement 18 elastisch über eine Druckfeder 34 mit dem Anker des Elektromagneten 17 verbunden.

Wie ferner Fig.2 entnehmbar ist, wird das Kabel 22 innerhalb der Rückenlehne 3 über eine Spannvorrichtung 35 straff gehalten, damit die Rückenlehne 3 verstellbar ist.

Bei einem Unfall wird über die Crashsensoreinrichtung 21 wiederum der Elektromagnet 17 angesteuert, so daß das Sperrelement 18 aus der Rastausnehmung 16 herausgezogen wird. Dadurch wird aufgrund der vorgespannten Drehfeder 19 die Betätigungswelle 12 einschließlich der Reibschlußkupplung 25 in Fahrzeugrichtung nach vorne geschwenkt, ohne daß Bremskräfte wirksam sind.

Danach kann die als Bremse wirkende Reibschlußkupplung 25 aktiviert werden, indem das Kopfstützkissen 4 manuell in die Ruheposition zurückgedrückt wird, so daß das Sperrelement 18 wieder in die Rastausnehmung 16 des Rastelementes 15 einrastet.

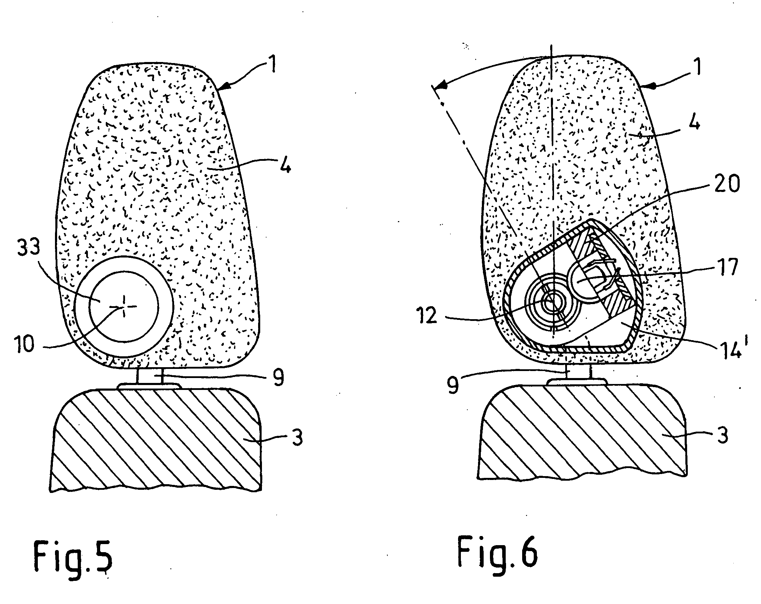

Wie den Fig.5 und 6 entnehmbar ist, muß die Drehachse 10 des Kopfstützbügels nicht zwingend in der mittleren senkrechten Ebene des Kopfstützkissens 4 liegen, sondern kann, falls sich dieses als zweckmäßig erweist, auch nach vorne verschoben angeordnet sein. Dabei kann der das elektromechanische Stellelement, die Betätigungswelle und die Kupplung aufnehmende Hohlraum 14' gegenüber dem in Fig.1 mit 14 bezeichneten Hohlraum gedreht in dem Kopfstützkissen angeordnet sein (Fig.6).

Die Erfindung ist selbstverständlich nicht auf die vorstehend beschriebenen Ausführungsbeispiele beschränkt. So ist es beispielsweise auch möglich, als elektromagnetisches Stellelement einen Elektromotor zu verwenden, der als Sperrelement eine Sperrklinke betätigt, welche ihrerseits in Wirkverbindung mit dem Rastelement steht.

Ferner können das Rastelement, der Elektromagnet sowie die Bremse auch in einem Hohlraum zwischen den beiden Schenkeln des Kopfstützbügels angeordnet sein.

Die aus dem Stecker 23 und der Buchse 24 bestehende Steckverbindung kann nach Entfernung der Kopfstütze 1 von der Rückenlehne 3 (d.h. nach dem Herausziehen der Führungsstangen 8, 9 aus der Rückenlehne) außerhalb der Rückenlehne 3 zusammengefügt und gegebenenfalls mittels einer Sicherung gesichert werden. Anschließend können dann die Steckverbindung und die Führungsstangen 8, 9 wieder in die Rückenlehne 3 eingeführt werden.

Die erfindungsgemäße Kopfstütze 1 kann in an sich bekannter Weise höhenverstellbar ausgebildet sein. Hierzu sind die Führungsstangen 8, 9 mit Rastkerben versehen, in die ein oberseitig an der Rückenlehne angeordneter, federbelasteter Schieber eingreift.

### Bezugszeichenliste

- 1: Kopfstütze
- 2: Fahrzeugsitz, Sitz
- 3: Rückenlehne
- 4: Kopfstützkissen
- 5: Kopfstützbügel, Bügel
- 6: (erste) Schenkel
- 7: (zweite) Schenkel
- 8: (erste) Führungsstange
- 9: (zweite) Führungsstange
- 10: Drehachse
- 11: Welle
- 12: Betätigungswelle
- 13: Drehlager
- 14,14': Hohlraum
- 15: Rastelement
- 16: Rastausnehmung
- 17: Elektromagnet, elektromagnetisches Stellelement
- 18: Sperrelement
- 19: erste Feder, Drehfeder
- 20: Trägerteil
- 21: Crashsensoreinrichtung
- 22: Kabel
- 23: Stecker
- 24: Buchse
- 25: Reibschlußkupplung, Bremse
- 26: erste Kupplungsscheibe
- 27: (zweite) Feder, Tellerfeder
- 28: zweite Kupplungsscheibe
- 29: Reibbelag
- 30: Trägerelement
- 31: Einstellelement, Mutter
- 32: Außengewinde
- 33: Abdeckelement
- 34: Druckfeder
- 35: Spannvorrichtung
- 36: Öffnung

## Patentansprüche

1. Schwenkbare Kopfstütze mit einem Kopfstützkissen (4) und einem mit dem Kopfstützkissen (4) drehfest verbundenen Kopfstützbügel (5), dessen Schenkel (6, 7) mit zwei in die Rükkenlehne (3) eines Fahrzeugsitzes (2) oberseitig einführbaren Führungsstangen (8, 9) verbindbar sind, wobei die beiden Schenkel (6, 7) des Kopfstützbügels (5) jeweils um eine horizontal verlaufende Drehachse (10) schwenkbar mit den beiden Führungsstangen (8, 9) verbunden sind und wobei die Kopfstütze (1) mindestens eine erste Feder (19) enthält, die mit dem Kopfstützbügel (5) in Wirkverbindung steht, derart, daß dieser durch die erste Feder (19) von einer Ruheposition, bei welcher die erste Feder (19) vorgespannt ist, in eine Crashposition, bei welcher die erste Feder (19) mindestens teilweise entspannt ist, um die Drehachse (10) schwenkbar ist, **dadurch gekennzeichnet,**
**daß** die beiden Schenkel (6, 7) des Kopfstützbügels (5) jeweils um eine in dem Kopfstützkissen (4) horizontal verlaufende Drehachse (10) schwenkbar mit den beiden Führungsstangen (8, 9) verbunden sind,
**daß** das Kopfstützkissen (4) einen Hohlraum (14, 14') aufweist, in dem ein mit mindestens einer der Führungsstangen (9) fest verbundenes und durch eine Crashsensoreinrichtung (21) steuerbares elektromagnetisches Stellelement (17) angeordnet ist, das ein bewegbares Sperrelement (18) umfaßt, welches mit einem mit dem Kopfstützbügel (5) drehfest verbundenen Rastelement (15) derart zusammenwirkt, daß der in seiner Ruheposition befindliche Kopfstützbügel (5) in dieser Position fixierbar ist, und daß im Crashfall das Sperrelement (18) das Rastelement (15) freigibt, so daß der Kopfstützbügel (5) durch die vorgespannte erste Feder (19) in seine Crashposition geschwenkt wird,
**daß** mit mindestens einem der beiden Schenkel (7) des Kopfstützbügels (5) eine sich in Richtung der Drehachse (10) erstreckende Betätigungswelle (12) drehfest verbunden ist,
**daß** das Rastelement (15) und die Betätigungswelle (12) über eine Reibschlußkupplung (25) miteinander verbunden sind, so daß in der Ruheposition des Kopfstützbügels (5) die Reibschlußkupplung (25) als Bremse wirkt, und
**daß** nach Entfernen des Sperrelementes (18) der Kopfstützbügel (5) zusammen mit der Reibschlußkupplung (25) in die Crashposition verschwenkt wird.

2. Schwenkbare Kopfstütze nach Anspruch 1, **dadurch gekennzeichnet, daß** das Rastelement (15) seitlich mindestens eine Rastausnehmung (16) aufweist, in die in der Ruheposition des Kopfstützbügels (5) das durch einen Elektromagneten (17) betätigbare stiftförmige Sperrelement (18) eingreift.

3. Schwenkbare Kopfstütze nach Anspruch 1 oder 2, **dadurch gekennzeichnet, daß** es sich bei der ersten Feder (19) zum Verschwenken des Kopfstützbügels (5) um eine auf die Betätigungswelle (12) wirkende Drehfeder handelt.

4. Schwenkbare Kopfstütze nach einem der Ansprüche 1 bis 3, **dadurch gekennzeichnet, daß** die Reibschlußkupplung (25) zur Veränderung der Bremskraft einstellbar ausgebildet ist.

5. Schwenkbare Kopfstütze nach einem der Ansprüche 1 bis 3, **dadurch gekennzeichnet, daß** die Reibschlußkupplung (25) eine mit der Betätigungswelle (12) drehfest verbundene erste Kupplungsscheibe (26) und eine sich daran anschließende, auf der Betätigungswelle (12) dreh- und verschiebbar angeordnete, durch eine zweite Feder (27) beaufschlagte zweite Kupplungsscheibe (28) mit Reibbelag (29) umfaßt, wobei die zweite Feder (27) sich auf ihrer der zweiten Kupplungsscheibe (28) abgewandten Seite an einem drehfest mit dem Rastelement (15) verbundenen Trägerelement (30) abstützt, welches durch ein Einstellelement (31) axial auf der Betätigungswelle (12) verschiebbar angeordnet ist.

6. Schwenkbare Kopfstütze nach Anspruch 5, **dadurch gekennzeichnet, daß** es sich bei dem Einstellelement (31) um eine Mutter handelt, welche auf ein an dem Ende der Betätigungswelle (12) befindliches Außengewinde (32) aufschraubbar ist und die auf die der zweiten Feder (27) abgewandten Seite des Trägerelementes (30) drückt.

7. Schwenkbare Kopfstütze nach Anspruch 5 oder 6, **dadurch gekennzeichnet, daß** es sich bei der zweiten Feder (27) um eine Tellerfeder handelt.

8. Schwenkbare Kopfstütze nach einem der Ansprüche 5 bis 7, **dadurch gekennzeichnet, daß** das Kopfstützkissen (4) seitlich eine durch ein Abdeckelement (33) verdeckbare Öffnung (36) aufweist, über welche das Einstellelement (31) zwecks Änderung der Bremskraft der Reibschlußkupplung (25) von außen zugänglich ist.

9. Schwenkbare Kopfstütze nach einem der Ansprüche 1 bis 7, **dadurch gekennzeichnet, daß** das durch einen Elektromagneten (17) betätigbare Sperrelement (18) elastisch über eine Druckfeder (34) mit dem Anker des Elektromagneten (17) verbunden ist.

10. Schwenkbare Kopfstütze nach einem der Ansprüche 1 bis 3, **dadurch gekennzeichnet, daß** die Ansteuerung des elektromagnetischen Stellelementes (17) über mindestens ein Kabel (22) erfolgt, welches axial innerhalb einer der Führungsstangen (9) geführt ist und mit einem am fahrzeugsitzseitigen Ende dieser Führungsstange (9) angeordneten elektrischen Stecker (23) verbunden ist, der mit einer in der Rückenlehne (3) des Fahrzeugsitzes (2) befindlichen Buchse (24) verbindbar ist.

## Claims

1. Swivel headrest, with a headrest cushion (4) and a headrest bracket (5) which is connected in a rotationally fixed manner to the headrest cushion (4) and the limbs (6, 7) of which can be connected to two guide rods (8, 9) which can be inserted into the upper side of the backrest (3) of a vehicle seat (2), wherein the two limbs (6, 7) of the headrest bracket (5) are each connected to the two guide rods (8, 9) in a manner such that they can swivel about an axis of rotation (10) running horizontally, and wherein the headrest (1) contains at least one first spring (19) which is operatively connected to the headrest bracket (5) in such a manner that the latter can be swivelled by the first spring (19) about the axis of rotation (10) from an inoperative position, in which the first spring (19) is prestressed, into a crash position in which the first spring (19) is at least partially relaxed, **characterized in that** the two limbs (6, 7) of the headrest bracket (5) are each connected to the two guide rods (8, 9) in a manner such that they can swivel about an axis of rotation (10) running horizontally in the headrest cushion (4), **in that** the headrest cushion (4) has a cavity (14, 14') in which an electromagnetic control element (17) is arranged, said control element being connected fixedly to at least one of the guide rods (9), being controllable by a crash sensor device (21) and comprising a moveable locking element (18) which interacts with a latching element (15), which is connected in a rotationally fixed manner to the headrest bracket (5), in such a manner that the headrest bracket (5) in its inoperative position can be fixed in said position, and **in that**, in the event of a crash, the locking element (18) releases the latching element (15) such that the headrest bracket (5) is swivelled into its crash position by the prestressed first spring (19), **in that** an actuating shaft (12) extending in the direction of the axis of rotation (10) is connected in a rotationally fixed manner to at least one of the two limbs (7) of the headrest bracket (5), **in that** the latching element (15) and the actuating shaft (12) are connected to each other via a frictional resistance coupling (25) in such a manner that, in the inoperative position of the headrest bracket (5), the frictional resistance coupling (25) acts as a brake, and **in that**, after the locking element (18) is moved away, the headrest bracket (5) is pivoted together with the frictional resistance coupling (25) into the crash position.

2. Swivel headrest according to Claim 1, **characterized in that** the latching element (15) has laterally at least one latching recess (16) in which, in the inoperative position of the headrest bracket (5), the pin-shaped locking element (18) which can be actuated by a solenoid (17) engages.

3. Swivel headrest according to Claim 1 or 2, **characterized in that** the first spring (19) for pivoting the headrest bracket (5) is a torsion spring acting on the actuating shaft (12).

4. Swivel headrest according to one of Claims 1 to 3, **characterized in that** the frictional resistance coupling (25) is of adjustable design in order to change the braking force.

5. Swivel headrest according to one of Claims 1 to 3, **characterized in that** the frictional resistance coupling (25) comprises a first coupling disc (26) connected in a rotationally fixed manner to the actuating shaft (12), and a second coupling disc (28) which adjoins the first coupling disc, is arranged rotatably and displaceably on the actuating shaft (12), is acted upon by a second spring (27) and has a friction lining (29), with the second spring (27) being supported on its side facing away from the second coupling disc (28) on a support element (30) which is connected in a rotationally fixed manner to the latching element (15) and is arranged in a manner such that it can be displaced axially on the actuating shaft (12) by an adjusting element (31).

6. Swivel headrest according to Claim 5, **characterized in that** the adjusting element (31) is a nut which can be screwed onto an external thread (32) located at the end of the actuating shaft (12) and which presses onto that side of the support element (30) which faces away from the second spring (27).

7. Swivel headrest according to Claim 5 or 6, **characterized in that** the second spring (27) is a Belleville spring.

8. Swivel headrest according to one of Claims 5 to 7, **characterized in that** the headrest cushion (4) has laterally an opening (36) which can be covered by a covering element (33) and via which the adjusting element (31) is accessible from the outside for the purpose of changing the braking force of the frictional resistance coupling (25).

9. Swivel headrest according to one of Claims 1 to 7, **characterized in that** the locking element (18) which can be actuated by a solenoid (17) is connected elastically to the armature of the solenoid (17) via a compression spring (34).

10. Swivel headrest according to one of Claims 1 to 3, **characterized in that** the electromagnetic adjusting element (17) is activated via at least one cable (22) which is guided axially within one of the guide rods (9) and is connected to an electric plug (23) which is arranged at the vehicle-seat end of said guide rod (9) and can be connected to a socket (24) located in the backrest (3) of the vehicle seat (2).

## Revendications

1. Appui-tête orientable comprenant un coussin d'appui-tête (4) et un étrier d'appui-tête (5) connecté de manière solidaire en rotation au coussin d'appui-tête (4), dont les branches (6, 7) peuvent être connectées à deux barres de guidage (8, 9) pouvant être introduites par le côté supérieur dans le dossier (3) d'un siège de véhicule (2), les deux branches (6, 7) de l'étrier d'appui-tête (5) étant chacune connectée aux deux barres de guidage (8, 9) de manière à pouvoir pivoter autour d'un axe de rotation (10) s'étendant horizontalement, et l'appui-tête (1) comprenant au moins un premier ressort (19), qui est en liaison fonctionnelle avec l'étrier d'appui-tête (5), de telle sorte que celui-ci puisse être pivoté autour de l'axe de rotation (10) par le premier ressort (19) d'une position de repos dans laquelle le premier ressort (19) est précontraint, dans une position de collision dans laquelle le premier ressort (19) est au moins partiellement détendu,
**caractérisé en ce que**
les deux branches (6, 7) de l'étrier d'appui-tête (5) sont connectées chacune aux deux barres de guidage (8, 9), de manière à pouvoir pivoter autour d'un axe de rotation (10) s'étendant horizontalement dans le coussin d'appui-tête (4), **en ce que** le coussin d'appui-tête (4) présente une cavité (14, 14') dans laquelle est disposé un élément de réglage (17) électromagnétique connecté fixement à au moins l'une des barres de guidage (9) et commandable par un dispositif de capteur de collision (21), lequel comprend un élément de verrouillage mobile (18), qui coopère avec un élément d'encliquetage (15) connecté de manière solidaire en rotation à l'étrier d'appui-tête (5) de telle sorte que l'étrier d'appui-tête (5) se trouvant dans sa position de repos puisse être fixé dans cette position et qu'en cas de collision, l'élément de verrouillage (18) libère l'élément d'encliquetage (15) de sorte que l'étrier d'appui-tête (5) soit pivoté dans sa position de collision par le premier ressort précontraint (19), -
**en ce qu'**un arbre d'actionnement (12) s'étendant dans la direction de l'axe de rotation (10) est connecté de manière solidaire en rotation à au moins l'une des deux branches (7) de l'étrier d'appui-tête (5),
**en ce que** l'élément d'encliquetage (15) et l'arbre d'actionnement (12) sont connectés l'un à l'autre par le biais d'un accouplement par engagement par friction (25) de sorte que dans la position de repos de l'étrier d'appui-tête (5), l'accouplement par engagement par friction (25) agisse comme un frein, et
**en ce qu'**après le retrait de l'élément de verrouillage (18), l'étrier d'appui-tête (5) ainsi que l'accouplement par engagement par friction (25) sont pivotés dans la position de collision.

2. Appui-tête orientable selon la revendication 1, **caractérisé en ce que** l'élément d'encliquetage (15) présente latéralement au moins un évidement d'encliquetage (16), dans lequel s'engage l'élément de verrouillage (18) en forme de goupille pouvant être actionné par un électroaimant (17) dans la position de repos de l'étrier d'appui-tête (5).

3. Appui-tête orientable selon la revendication 1 ou 2, **caractérisé en ce que** le premier ressort (19) pour faire pivoter l'étrier d'appui-tête (5) est un ressort de torsion agissant sur l'arbre d'actionnement (12).

4. Appui-tête orientable selon l'une quelconque des revendications 1 à 3, **caractérisé en ce que** l'accouplement par engagement par friction (25) est réalisé de manière ajustable pour modifier la force de freinage.

5. Appui-tête orientable selon l'une quelconque des revendications 1 à 3, **caractérisé en ce que** l'accouplement par engagement par friction (25) comprend un premier disque d'accouplement (26) connecté de manière solidaire en rotation à l'arbre d'actionnement (12) et un deuxième disque d'accouplement (28) avec une garniture de friction (29), sollicité par un deuxième ressort (27), se raccordant au premier disque d'accouplement (26) et disposé de manière rotative et déplaçable sur l'arbre d'actionnement (12), le deuxième ressort (27) s'appuyant sur son côté opposé au deuxième disque d'accouplement (28) contre un élément de support (30) connecté de manière solidaire en rotation à l'élément d'encliquetage (15), qui est disposé de manière déplaçable axialement sur l'arbre d'actionnement (12) par un élément d'ajustement (31).

6. Appui-tête orientable selon la revendication 5, **caractérisé en ce que** l'élément d'ajustement (31) est un écrou qui peut être vissé sur un filetage extérieur (32) se trouvant sur l'extrémité de l'arbre d'actionnement (12), et qui presse sur le côté de l'élément de support (30) opposé au deuxième ressort (27).

7. Appui-tête orientable selon la revendication 5 ou 6, **caractérisé en ce que** le deuxième ressort (27) est un ressort Belleville.

8. Appui-tête orientable selon l'une quelconque des revendications 5 à 7, **caractérisé en ce que** le coussin d'appui-tête (4) présente latéralement une ouverture (36) pouvant être couverte par un élément de recouvrement (33), par le biais de laquelle l'élément d'ajustement (31) est accessible de l'extérieur à des fins de modification de la force de freinage de l'accouplement à engagement par friction (25).

9. Appui-tête orientable selon l'une quelconque des revendications 1 à 7, **caractérisé en ce que** l'élément de verrouillage (18) pouvant être actionné par un électroaimant (17) est connecté élastiquement par le biais d'un ressort de pression (34) à l'induit de l'électroaimant (17).

10. Appui-tête orientable selon l'une quelconque des revendications 1 à 3, **caractérisé en ce que** la commande de l'élément de réglage (17) électromagnétique s'effectue par le biais d'au moins un câble (22), qui est guidé axialement à l'intérieur d'une des barres de guidage (9) et qui est connecté à un connecteur électrique mâle (23) disposé à l'extrémité de cette barre de guidage (9) du côté du siège du véhicule, le connecteur électrique mâle pouvant être connecté à une prise femelle (24) située dans le dossier (3) du siège du véhicule (2).
